# EUROPEAN PATENT APPLICATION

(11) **EP 4 640 472 A1**
(43) Date of publication of application: **29.10.2025**
(21) Application number: 24172157.0
(22) Date of filing: 24.04.2024
(51) Int. Cl.: B60L 3/04

(54) **A SYSTEM FOR WELD CHECKING A CONTACTOR FOR A TRACTION BATTERY OF AN ELECTRIC VEHICLE, AN ELECTRIC VEHICLE AND A METHOD FOR WELD CHECKING A CONTACTOR FOR A TRACTION BATTERY OF AN ELECTRIC VEHICLE**

(71) Applicant: VOLVO TRUCK CORPORATION, 405 08 Göteborg (SE)
(72) Inventor: NYSTRÖM, Mats, 423 53 Torslanda (SE)
(74) Representative: Zacco Sweden AB

(57) **Abstract**

A system for weld checking a contactor for a traction battery of an electric vehicle is disclosed. The contactor is arranged to be in a closed or an open state to electrically connect or disconnect the traction battery from an electrical load. The system comprising: an electric circuit; the electric circuit comprises a first impedance network having a first impedance, and a second impedance network having a second impedance equal to the first impedance; and a differential amplifier electrically connected to the first and second impedance networks, the differential amplifier being configured to receive a first signal via the first impedance network and a second signal via the second impedance network and to provide a difference signal based on the first and second signals. The system is configured to determine whether the contactor is in the closed state or in the open state based on the difference signal.

## Description

### TECHNICAL FIELD

The disclosure relates generally to a system for weld checking a contactor for a traction battery of an electric vehicle. The vehicle may be a vehicle used in a broad range of technical fields such as transportation on land, on water and in the air. In particular aspects, the disclosure relates to a system for weld checking a contactor for a traction battery of an electric vehicle, an electric vehicle and a method for weld checking a contactor for a traction battery of an electric vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure can, by way of example, be applied to different vehicles such as cars, trucks, trains, water vehicles and airplanes.

### BACKGROUND

In high-current applications, such as those found, for example, in electronic vehicles (EVs), there can be instances where the electrical contacts may become welded together due to high currents driven by high voltage that are passing through the electrical contacts. This phenomenon is known as "welding" or "contact welding." The welding is a result of the high current generating significant heat at contact points, thereby causing at least a part of the contacts to melt and fuse together. In more detail, when breaking a high current arching may occur and this may contribute to a high temperature. Contact welding, for instance within in a contactor, can result in a permanent electrical connection between the contacts, preventing them from opening when they should. This may lead to safety problems. By way of example, the welding can lead to inability to isolate electrical components or systems for maintenance or repair. The welding may further lead to damage of electrical equipment or components thereof due to sustained overcurrent conditions.

To mitigate the risk of welding, proper design considerations, material selection, and regular maintenance are essential when manufacturing the EVs. Additionally, employing protective measures such as current-limiting devices, thermal management systems, and periodic inspection and cleaning of contacts can help prevent welding and ensure the reliability and safety of the electrical system in EVs or other high-current applications. There is therefore a need for reliable tests to determine and/or to monitor if contact welding has occurred. These tests typically involve a combination of visual inspection, electrical measurements, and functional testing. By way of example, methods used to detect and monitor contact welding includes visual inspection where inspectors look for physical changes in the appearance of the contacts, such as discoloration, deformation, or the presence of fused material between contact points. Thermal imaging using cameras can also be used to detect abnormal heating at the contact points, which may occur due to contact welding or pre-stages thereof. By measuring the electrical resistance across the contacts, technicians can detect abnormal increases in resistance, which may indicate contact welding. Functional testing involves applying load or current to the contacts and observing their behavior. There is, however, a need for more reliable and sensitive systems and methods for weld checking.

### SUMMARY

According to a first aspect of the disclosure, there is provided a system for weld checking a contactor for a traction battery of an electric vehicle, the contactor is arranged to be in a closed or an open state to electrically connect or disconnect the traction battery from an electrical load of the electric vehicle; the system comprising: an electric circuit; wherein the electric circuit comprises a first impedance network having a first impedance, the first impedance network being configured to electrically connect to a sourcing side of the contactor, the sourcing side of the contactor being electrically connected to a first terminal of the traction battery, and a second impedance network having a second impedance equal to the first impedance, the second impedance network being configured to electrically connect to a load side of the contactor; and a differential amplifier electrically connected to the first impendence network and the second impedance network, the differential amplifier being configured to receive a first signal via the first impedance network and a second signal via the second impedance network and to provide a difference signal based on the first and second signals; wherein the system is configured to determine whether the contactor is in the closed state or in the open state based on the difference signal. The first aspect of the disclosure may seek to solve the problems of contactors being welded closed, e.g. when the contactor is trying to break a high current. A technical benefit may include that an improved system for weld checking is provided. By utilizing a differential amplifier that is balanced a more sensitive and more reliable detection of if a welding has occurred at the contactor may be detected. By using a differential amplifier an improved voltage swing, better noise immunity, better common-mode rejection properties and low harmonic distortion may be obtained. A faster and/or more accurate determining of the state of the contactor can moreover be obtained by the system. A circuit having small foot print and be obtained. A robust and more sensitive system is may also be provided. A more cost-effective system may further be provided.

The system may comprise a control unit. The differential amplifier may be electrically connected to the first impendence network, the second impedance network, and a control unit. The differential amplifier may be configured to receive a first signal via the first impedance network and a second signal via the second impedance network and to provide a difference signal to the control unit based on the first and second signal. The control unit may be configured to determine whether the contactor is in the closed state or in the open state based on the difference signal.

The electrical load may be a traction voltage bus of the vehicle.

The contactor may be arranged to be in a closed or an open state to electrically connect or disconnect the traction battery from the traction voltage bus of the electric vehicle.

The differential amplifier may be AC coupled to the first and the second impedance network.

The differential amplifier may be arranged in a dual-input balanced circuit. The differential amplifier may be designed to amplify a voltage difference between two input signals while keeping the output balanced around a reference point. The differential amplifier may be referred to as a balanced differential amplifier. The reference point may be ground. The differential amplifier may be designed to rejects common-mode signals and responds only to the signal difference. The differential amplifier may comprise one or more operational amplifiers in a differential setup to achieve the desired characteristics.

The term "weld checking" should be construed as providing an indication of if a welding has occurred to the contactor. The welding may be referred to as contact welding. Put differently, the weld checking is performed to determine whether the contactor is welded closed. The welding may be a result of a high-voltage applied over the contactor. The welding may be a result of a high current pasting through the contactor.

The term "contactor" is be understood as a relay configured to switching a circuit path of an electrical circuit on or off. The contactor may be an electromechanical switch configured to establish or break the connection between a power supply and a load. The contactor may be a main power switch of a vehicle.

The traction battery may be referred to as a traction battery pack or a traction voltage battery pack. The traction battery may be understood as a type of rechargeable battery specifically designed to provide power for the traction or propulsion systems of electric vehicles (EVs), hybrid electric vehicles (HEVs), and plug-in hybrid electric vehicles (PHEVs). The traction batteries may also be referred to as drive batteries or high-voltage batteries.

The electric circuit may be configured to electrically disconnect the traction battery from the traction voltage bus in an open state of the contactor and electrically connect the traction battery to the traction voltage bus in a closed state of the connector.

Optionally in some examples, including in at least one preferred example, the system further comprises a control unit, the control unit being configured to determine whether the contactor is in a closed state or in an open state based on the difference signal being above a threshold value. A technical benefit may include that false positives are mitigated. A more reliable system is thereby provided. The threshold value may be set considering a balance between speed, e.g. higher threshold, or safety, e.g. a lower threshold, which may be monitored for a longer time.

Optionally in some examples, including in at least one preferred example, the system comprises an AC power source configured to send an AC probe signal to the electric circuit, wherein the differential amplifier is configured to receive the first signal and the second signal in response to the sent AC probe signal. A technical benefit may include that a more sensitive system is provided. The timing between the sending of the AC probe signal and the detecting of the first and second signal may, moreover, be controlled. A more reliable system may thereby be provided. Spurious signals may be mitigated.

The probe signal may be understood as a test signal. The alternating current (AC) power source may be configured to provide an AC signal to probe the electric circuit at the first terminal. The first signal and the second signal may pertain to the AC probe signal sent by the AC power sourced.

The difference signal may be understood as the resulting difference in signals provided to the first and the second impedance networks by an AC probe signal. Put differently, the two balanced connections fed to the differential amplifier may produce a signal representing the difference between the two contact elements in the contactor. The system may be used to verify that a test signal, e.g. the AC probe signal, is applied and also to tune it for instance to the optimal frequency and amplitude. A more well controlled and reliable system may therefore be provided.

The electric circuit may be configured to electrically connect the AC power source and a first terminal of the traction battery. The AC power source may be configured to send an AC probe signal to the electric circuit.

Optionally in some examples, including in at least one preferred example, the system comprises a third impedance network having a third impedance, the third impedance network being electrically connected to the AC power source such that the AC power source is configured to provide the AC probe signal to the electric circuit via the third impedance network. A technical benefit may include that the tuning of the impedance for the third impedance network may used to match the impedance at the first terminal. The tuning may be performed when the contactor is in the closed state. Hence the combined impedance for the battery itself and external load may be considered and compensated for.

Optionally in some examples, including in at least one preferred example, the control unit, in a learning phase, is configured to determine and store signal values associated with the first and second signals upon the controller being in a closed state and an open state, respectively. A technical benefit may include that the learning phase may allow for a more accurate interrogation of the signal propagation in the circuit. By storing the signal values reference values for the system may be provided. A more reliable weld checking may be provided. A calibration of the signal propagation may be performed.

Optionally in some examples, including in at least one preferred example, the control unit, in a weld checking phase, is configured to determine whether the contactor is in the closed state or in the open state based on the AC probe signals provided to the first and second impedance networks and the stored signal values from the learning phase. A technical benefit may include that a more reliable system is provided. Put differently, the learning phase may provide reference values in the form of the stored signal values. The threshold value may be based on the stored signal values. Spurious signals may thereby be discarded. A more reliable system may be provided. Changes to the properties of the contactor may moreover be monored in an efficient manner. By way of example, changes in the conductivity of the conductor in the closed as well as in the open state may be monitored. The changes may be associates with the contactor being in the open or the closed state.

Optionally in some examples, including in at least one preferred example, the control unit is configured to determine a threshold value pertaining to a signal value difference between the first and second signals determined in closed state and the first and second signals determined in an open state. A technical benefit may include that false positives are mitigated. A more reliable system is thereby provided. Spurious signals may thereby be discarded. A more reliable system may be provided. The control unit may be configured to determine a threshold value pertaining to a signal value difference between the first and second signals determined in a closed state. An advantage being that a detection level may be calibrated, e.g. by setting the threshold value, by determining the value of the difference signal when the contactor is closed.

Optionally in some examples, including in at least one preferred example, the control unit, in a weld checking phase, is configured to determine whether the contactor is in the closed state or in the open state based on the AC probe signals provided to the first and second impedance networks and the threshold value. A technical benefit may include that the threshold value allows for a consistent monitoring of the state of the contactor. Problems associated with false positives may, moreover, be mitigated.

Optionally in some examples, including in at least one preferred example, the control unit is configured to set or receive data pertaining to the contactor being set in an open state and generate a warning signal upon determining that the contactor is in a closed state thereby indicating that the contactor is welded. A technical benefit may include that the warning signal may be sent to other functions of a vehicle or to persons associated with the electric vehicle. Damage to persons or parts of the electric vehicle may thereby be mitigated.

The closed state may be understood to be a partly closed state. Put differently, the contactor may be partly closed with a contact impedance that is higher than for a fully closed contactor. The control unit may be configured to set the contactor in the open state. The control unit may be configured to set the contactor in the closed state.

Optionally in some examples, including in at least one preferred example, the first impendence network comprises a first capacitor, C1, and a first resistor, Rl, and the second impedance network, comprises a second capacitor, C2, and a second resistor, R2, wherein the capacitance of the first capacitor, C 1, is the same as the capacitance of the second capacitance, C2, and the resistance of the first resistor, R1, is the same as the second resistor, R2. A technical benefit may include that a cost-effective system is provided. The configuration of the system and/or matching of impedances may moreover be simplified.

Optionally in some examples, including in at least one preferred example, the third impendence network comprises a third capacitor, C3, and a third resistor, R3, whereby the impedance of the third impendence network is set to match the impedance at the first terminal. A technical benefit may include that an improved transfer of power between may be achieved. The energy consumption for AC power source may thereby be reduced.

Optionally in some examples, including in at least one preferred example, wherein the differential amplifier is a high-Q differential amplifier configured to pass signals within a frequency range, wherein the AC power source is tunable in frequency such that the frequency of the AC probe signal is within the frequency range. A technical benefit may include that an improved frequency selectivity is provided. By amplifying signals within the frequency range, e.g. a narrow frequency band, and rejecting signals outside that range, the high-Q differential amplifier may maintain a higher signal purity. An improved amplification may be provided. Put differently, the high-Q differential amplifier may efferently amplify weak signals with high sensitivity. By focusing on signals within the frequency range, the amplifier can extract and amplify weak signals more effectively, enhancing the overall sensitivity of the system. In other words, the high-Q differential amplifier may allow for more accurate frequency filtering and signal processing allowing for a more precise control over the frequency response.

The electric circuit may comprise a variable capacitor and/or a variable inductor such that the frequency of first and second signals are within the frequency range. By way of example, the impedance of the first impedance network and the second impedance network may be tuned such that signals propagating through the networks are matching the frequency range. Alternatively, the controller may be configured to sweep in frequency to determine an excitation frequency.

Optionally in some examples, including in at least one preferred example, the differential amplifier is configured to determine a phase difference pertaining to the AC probe signal, the received first and a second signals and wherein the provided difference signal is based on the detected phase information; and wherein the control unit is configured to determine whether the contactor is in a closed state or in an open state based on the difference signal. A technical benefit may include that a more sensitive and accurate system is provided.

The differential amplifier may have a well-defined phase response within its passband. Put differently, a phase distortion of signals passing through the differential amplifier may be reduces. An improved signal integrity may thereby be provided as the phase coherence and fidelity can be maintained. The differential amplifier may be configured to perform phase shift compensation. In more detail, signals such as the first and the second signal, may undergo phase shifts as they pass through various stages of amplification, filtering, or transmission. By utilizing a differential amplifier such as a high-Q differential amplifier, having a well-defined phase response characteristic can be used to compensate for these phase shifts. An advantage being that the phase relationship between different components of the signals may remain intact. A more reliable and sensitive system may thereby be provided. In other words, a detection of a shift in phase between the open and the closed state may be achieved with improved accuracy.

Optionally in some examples, including in at least one preferred example, the difference signal pertains to a phase difference and wherein the control unit is configured to determine whether the contactor is in the closed state or in the open state based on the phase difference being higher than a phase difference threshold value. A technical benefit may include that false positive signals may be mitigated. A more robust system may therefore be provided.

According to a second aspect of the disclosure, there is provided an electric vehicle comprising the system according to the first aspect. The second aspect of the disclosure may seek to provide a vehicle that is safer. Problems associated with the contact welding which can lead to inability to isolate electrical components or systems of the vehicle for maintenance or repair may moreover be identified. The vehicle may thereby be serviced in a safer manner.

The electric vehicle may be understood to be a fully electric vehicle also referred to as a battery electric vehicle (BEV) or a plug-in hybrid electric vehicle (PHEV). The electrical vehicle may be a hybrid electric vehicle (HEV).

The electric vehicle may, for example, be a water vehicle or an airplane. The electrical vehicle may be a heavy-duty vehicle. The electric vehicle may, by way of example, be a truck, a car, a constructing equipment, a boat, or a train. The construction equipment may, for example, be a bulldozer, an escalator, or a loader. The electrical vehicle may be an agricultural vehicle such as a tractor.

According to a third aspect of the disclosure, there is provided a method for weld checking a contactor for a traction battery of an electric vehicle, the electric vehicle comprising the system according to the first aspect, the method comprising: receiving, by the differential amplifier a first signal via the first impedance network and a second signal via the second impedance network; providing a difference signal based on the received first and second signals; determining whether the contactor is in a closed state or in an open state based on the difference signal.

The system may comprise a control unit. The providing of a difference signal based on the received first and second signals may be to the control unit. Put differently, the difference signal may be sent from the differential amplifier to the control unit. The control unit may receive the difference signal. The determining whether the contactor is in a closed state or in an open state based on the difference signal may be by the control unit.

Optionally in some examples, including in at least one preferred example, the method further comprises sending an AC probe signal from the AC power source to the electric circuit; wherein the receiving, by the differential amplifier, of the first signal and the second signal is in response to the AC probe signal.

Effects and features of the second and third aspects are to a large extent analogous to those described above in connection with the first aspect. Examples mentioned in relation to the first aspect are largely compatible with the second and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary illustration of a system for weld checking a contactor for a traction battery of an electric vehicle according to an example.
**FIG. 2** is an exemplary illustration of a system for weld checking a contactor for a traction battery of an electric vehicle according to an example.
**FIG. 3** is an exemplary illustration of flow chart for a method for weld checking a contactor for a traction battery of an electric vehicle according to an example.
**FIG. 4** is an exemplary illustration of an electrical vehicle comprising a system for weld checking a contactor for a traction battery of the electric vehicle according to an example.
**FIG. 5** is an exemplary illustration of flow chart for determining if the contactor is in a closed state or in an open state according to an example.
**FIG. 6** is another view of **FIG. 1****,** according to an example.

### DETAILED DESCRIPTION

The detailed description set forth below provides information and examples of the disclosed technology with sufficient detail to enable those skilled in the art to practice the disclosure.

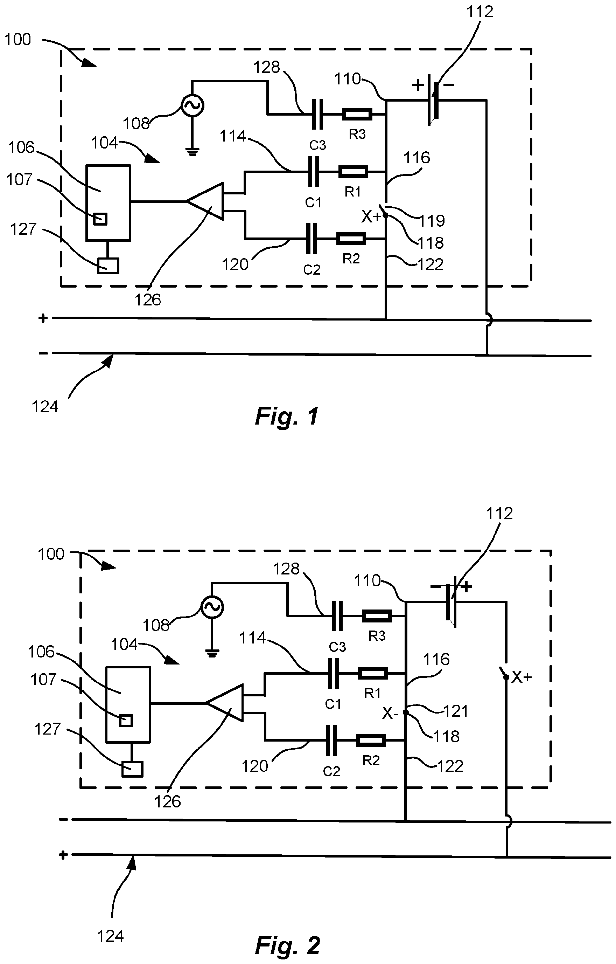

**FIG. 1** is an exemplary illustration of a system for weld checking a contactor for a traction battery of an electric vehicle according to an example. In more detail, **FIG. 1** shows a system for weld checking of a contactor. The contactor 118 may be a contactor for a traction battery 112 of an electric vehicle. The contactor 118 may be arranged to be in a closed or an open state to electrically connect or disconnect the traction battery 112 from an electrical load of the vehicle. The electrical load is in **FIG. 1** illustrated as a traction voltage bus 124 of the electric vehicle. The contactor 118 is in **FIG. 1** denoted X+. The contactor is here exemplified to be connected to a positive node of the traction battery 112. The contactor 118 is illustrated to be in an open state 119.

The system 100 may comprise an electric circuit 104. The system 100 may comprise a control unit 106. The control unit 106 may be or form part of a battery management unit (BMU). The control unit 106 may comprise a memory 107. The memory 107 may comprise data pertaining to stored values such as threshold values. The memory 107 may comprise data pertaining to stored signal values or other data pertaining to the system. The control unit 118 may comprise one or more processors for processing data.

The electric circuit 104 may comprise a first impedance network 114 having a first impedance. The first impedance network 114 may be configured to electrically connect to a sourcing side 116 of the contactor 118. The sourcing side may be referred to as a line side. The sourcing side 116 may be understood to supply power. The sourcing side 116 of the contactor 118 may be electrically connected to the first terminal 110 of the traction battery 112. The electric circuit 104 may further comprise a second impedance network 120. The second impedance may be equal to the first impedance. The second impedance network 120 may be configured to electrically connect to a load side 122 of the contactor 118. The load side 122 may be understood to use power from the traction battery 112.

The system 100 may comprise a differential amplifier 126 electrically connected to the first impendence network 114, the second impedance network 120, and the control unit 106. The differential amplifier may be AC coupled to the first and the second impedance network 114, 120.

The differential amplifier 126 may be configured to receive a first signal via the first impedance network 114 and a second signal via the second impedance network 120. The first and second signals may be electrical signals. The differential amplifier 126 may be configured to provide a difference signal to the system based on the received first and second signals. The difference signal may be sent from the differential amplifier 126 to the control unit 106. The control unit 106 may be configured to retrieve the difference signal from the differential amplifier 126. The differential signal may be based on the received first and second signals. The system 100 may be configured to determine whether the contactor 118 is in a closed state or in an open state based on the difference signal. The control unit 106 of the system 100 may be configured to determine whether the contactor 118 is in a closed state or in an open state based on the difference signal.

The system 100 may comprise an AC power source 108 configured to send an AC probe signal to the electric circuit 104. The differential amplifier 126 may be configured to receive the first signal and the second signal in response to the sent AC probe signal. Put differently, the AC probe signal may propagate through the first and the second impedance networks 114, 120 to the differential amplifier 126.

The control unit 106 may be configured to determine whether the contactor 118 is in a closed state or in an open state based on the difference signal being above a threshold value.

The control unit 106 may be configured to determine a threshold value pertaining to a signal value difference between the first and second signals determined in a closed state and the first and second signals determined in an open state.

The control unit 106 may, in a weld checking phase, be configured to determine whether the contactor 118 is in the closed state or in the open state based on the AC probe signals provided to the first and second impedance networks 114,120 and the threshold value.

The differential amplifier 126 may be a high-Q differential amplifier. The high-Q differential amplifier may be configured to pass signals within a frequency range.

The AC power source 108 may be tunable in frequency such that the frequency of the AC probe signal is within the frequency range.

The differential amplifier 126 may be configured to determine a phase difference pertaining to the AC probe signal, the received first and second signals. The provided difference signal may be based on the detected phase information. The control unit 106 may be configured to determine whether the contactor 118 is in a closed state or in an open state based on the phase difference signal. Put differently, a difference and/or change in phase between the first and the second signals may be detected.

Thus, the difference signal may pertain to a phase difference. The control unit 106 may be configured to determine whether the contactor 118 is in the closed state or in the open state based on the phase difference being higher than a phase difference threshold value.

With further reference to FIG. 1, the first impendence network 114 may comprises a first capacitor, C1, and a first resistor, R1, and the second impedance network 120, comprises a second capacitor, C2, and a second resistor, R2, wherein the capacitance of the first capacitor, C1, is the same as the capacitance of the second capacitance, C2, and the resistance of the first resistor, R1, is the same as the second resistor, R2. It may be noted that one or both of the first and second impedance networks may comprise one or more additional resistors and/or capacitors. The resistors and/or capacitors may be variable. The first and the second impedance networks 114, 120 may comprise different components for setting the impedance for the respective impedance network.

The system 100 may comprise a third impedance network 128. The third impedance network 128 having a third impedance. The third impedance network 128 may be electrically connected to the AC power source 108. The AC power source 108 may thereby be configured to provide the AC probe signal to the electric circuit 108 via the third impedance network 128. Put differently, the AC power source may be arranged to send the AC probe signal to the electric circuit 108 via the third impedance network 128.

The third impendence network 128 may comprise a third capacitor, C3, and a third resistor, R3, whereby the impedance of the third impendence network 128 is set to match the impedance at the first terminal 110. The third impedance network may comprise one or more additional resistors and/or capacitors. The resistors and/or capacitors may be variable.

The control unit 106 may be configured to set or receive data pertaining to the contactor 118 being set in an open state and generate a warning signal upon determining that the contactor 118 is in a closed state thereby indicating that the contactor 118 is welded. The control unit 106 may receive data from a user interface. The control unit 106 may be configured broadcast the warning signal. The system 100 may comprise a communication unit 127. The communication unit 127 may be communicatively connected to the control unit 106. The communication unit 127 may be configured to send the warning signal to a remote server such that a driver of the vehicle and/or a person performing service to the vehicle may be warned about the contactor 118 being welded. The warning signal may be sent to a user interface of the vehicle.

The control unit 106 may be configured to be in a learning phase. The learning phase may be understood as the control unit 106 being in a learning mode. The control unit 106 may be set in the learning mode. The control unit 106 may be configured to, while being in the learning phase, determine and store signal values associated with the first and second signals upon the controller 118 being in a closed state and an open state, respectively. The signal values may be stored in the memory 117. The signal values may alternatively or in combination be stored on a server. Data, for example, pertaining to signal values stored in the server may be accessible via the communication unit 127.

The control unit 106 may be configured to be in a weld checking phase. The weld checking phase maybe understood as the control unit 106 being in a weld checking mode. The control unit 106 may be set in the weld checking mode. The control unit 106 may, in the weld checking phase, be configured to determine whether the contactor 118 is in the closed state or in the open state based on the AC probe signals provided to the first and second impedance networks 114,120 and the stored signal values from the learning phase.

**FIG. 2** is an exemplary illustration of a system for weld checking a contactor for a traction battery of an electric vehicle according to an example. The contactor 118 is in **FIG. 2** is denoted X- and is here exemplified to be connected to a negative node of the traction battery 112. The contactor 118 is illustrated to be in a closed state 121. It may further be noted that the system may comprise an additional contactor. The additional contactor is here denoted X+ and is here exemplified to be connected to a positive node of the traction battery 112. According to other example a first system such as the system 100 may be arranged for weld checking a first contactor and a second system, such as the system 100, may be arranged for weld checking a second contactor. By way of example, the signal generator may be the same for the first and the second system. A plurality of contactor may thereby be analyzed. The differential amplifier may be arranged to compare more than one pair of input signals. This may be achieved for example, by cascade multiple stages of differential amplifiers or the use multi-channel differential amplifiers to compare more than two pairs of signals. The comparing between one or more pairs of signals may be performed substantially simultaneously. The differential amplifier may be a multi-channel differential amplifier.

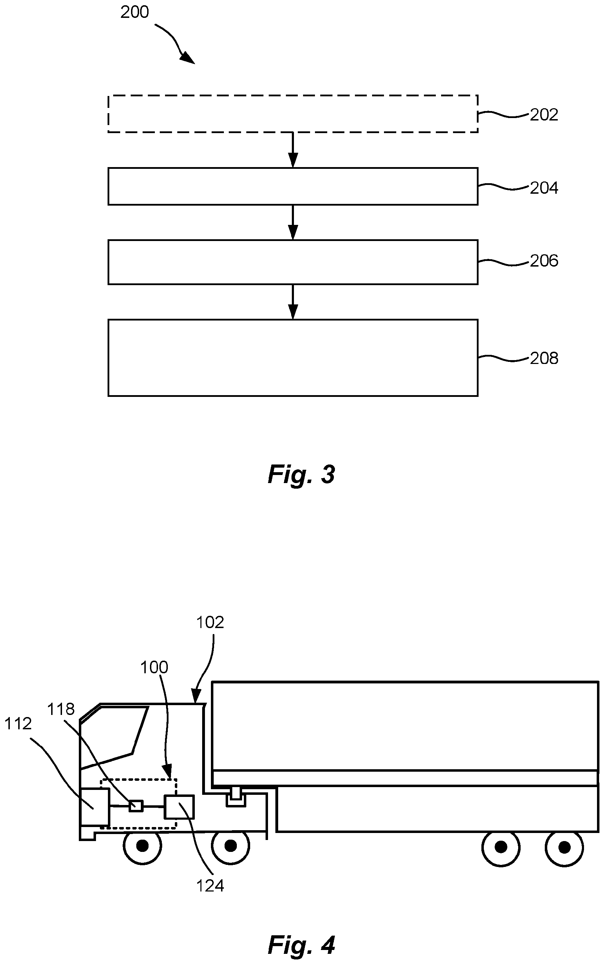

**FIG. 3** is an exemplary illustration of flow chart for a method for weld checking a contactor for a traction battery of an electric vehicle according to an example.

The method 200 for weld checking a contactor for a traction battery of an electric vehicle comprising the system 100 as described above. The method 200 may comprise: receiving 204, by the differential amplifier 126, a first signal via the first impedance network 114 and a second signal via the second impedance network 120. The method 200 may further comprise providing 206 a difference signal based on the received first and second signals. The providing 206 of the difference signal may be to a control unit 106 of the system 100. The method 200 may thereby allow for a determining 208, e.g. by the control unit 106, of whether the contactor 118 is in a closed state or in an open state based on the difference signal.

The method 200 may further comprises sending 202 an AC probe signal from the AC power source 108 to the electric circuit 104. The receiving 204, by the differential amplifier 126 of the first signal and the second signal may in response to the AC probe signal.

**FIG. 4** is an exemplary illustration of an electrical vehicle comprising a system for weld checking a contactor for a traction battery of the electric vehicle according to an example. The electric vehicle 102 is here exemplified as a truck. The truck comprising the system 100 as described above. **FIG. 4** further illustrates that a contactor 118 of the system 100 is arranged to be in a closed or an open state to electrically connect or disconnect the traction battery 112 from a traction voltage bus 124 of the electric vehicle 102.

The electric vehicle 102 may be a heavy-duty vehicle. The heavy-duty vehicle may alternatively be a bus, a construction equipment. The electric vehicle may in other examples be a train, a water vehicle or airplane comprising the system 100.

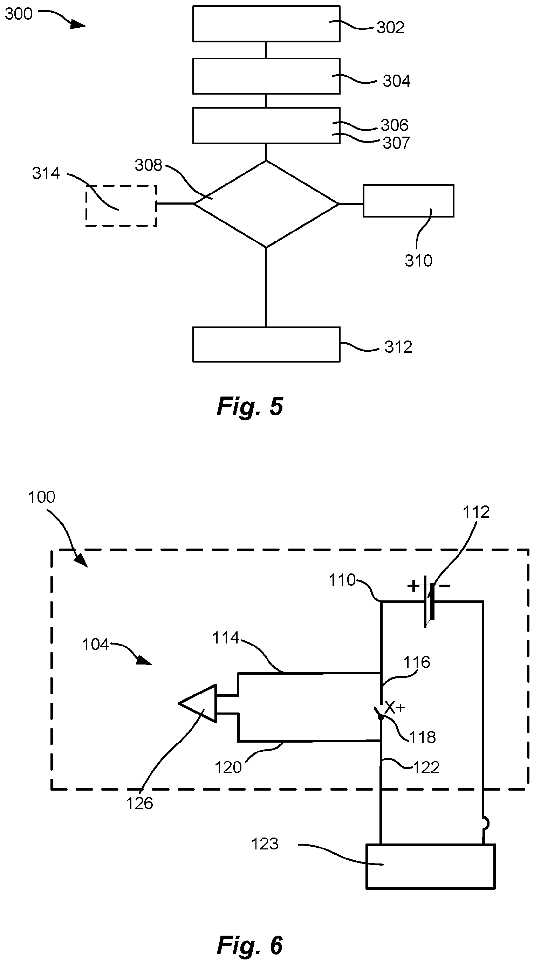

**FIG. 5** is an exemplary illustration of flow chart for determining if the contactor is in a closed state or in an open state according to an example. With reference to **FIGs. 1** to **3****,** and **FIG. 5****,** the method 200 may comprise: receiving, by the differential amplifier 126, a first signal 302 via the first impedance network 114 and a second signal 304 via the second impedance network 120. The method 200 may further comprise providing 206 a difference signal to the control unit 106 based on the received first and second signals 302, 304. Put differently, the method may comprise determining a difference between the first and the second signals 302, 304. The method 200 may allow for determining of a difference signal 306.

The method 200 may thereby allow for a determining 308 by the control unit 106 of whether the contactor 118 is in a closed state 310 or in an open state 312 based on the difference signal. As discussed above, the differential amplifier 126 may be configured to determine a phase difference 307 pertaining to the AC probe signal, the received first and the second signals, 302, 304. The determined difference signal may be based on the detected phase information. The control unit 106 may be configured to determine 308 whether the contactor 118 is in a closed state or in an open state based on the difference signal.

The difference signal may pertain to a phase difference. The control unit 106 may be configured to determine whether the contactor 118 is in the closed state or in the open state based on the phase difference being higher than a phase difference threshold value. The determining 308 by control unit 106 if the contactor 118 is in a closed state 310 or in an open state 312 may be based on the difference signal being above a threshold value 314. The reference value 314 may be stored in a memory 107 of the control unit 106. By way of example, when phase detection is used the method allows for the analyzing of the phase difference that may result in a distorted signal when contactor is open, and the distortion may drop when contactor is closed. The method 200 may utilize total harmonic distortion (THD) to estimate the phase distortion. The distortion may, typically change from more than 30 dB to less than 10 dB according to some examples. The reference value 314 may be a threshold value. The reference value 314 may be a phase difference threshold value.

**FIG. 6** is another view of **FIG. 1****,** according to an example. With reference to **FIG. 6** a system 100 for weld checking a contactor for a traction battery of an electric vehicle, the contactor 118 is arranged to be in a closed or an open state to electrically connect or disconnect the traction battery 112 from an electrical load 123 of the electric vehicle 102; the system 100 comprising: an electric circuit 104; wherein the electric circuit 104 comprises a first impedance network 114 having a first impedance, the first impedance network 114 being configured to electrically connect to a sourcing side 116 of the contactor 118, the sourcing side 116 of the contactor 118 being electrically connected to the first terminal 110 of the traction battery 112, and a second impedance network 120 having a second impedance equal to the first impedance, the second impedance network 120 being configured to electrically connect to a load side 122 of the contactor 118; and a differential amplifier 126 electrically connected to the first impendence network 114 and the second impedance network 120, the differential amplifier 126 being configured to receive a first signal via the first impedance network 114 and a second signal via the second impedance network 120 and to provide a difference signal to the system 100 based on the first and second signals; wherein the system 100 is configured to determine whether the contactor 118 is in the closed state or in the open state based on the difference signal.

According to other examples, a system for weld checking a contactor for a traction battery of an electric vehicle may be provided. The contactor may be configured to electrically connect or disconnect the traction battery from a traction voltage bus of the electric vehicle; the system comprising: an electric circuit; a control unit; an AC power source; wherein the electric circuit is configured to electrically connect the AC power source and a first terminal of the traction battery and wherein the AC power source is configured to send an AC probe signal to the electric circuit; wherein the electric circuit comprises a first impedance network having a first impedance, the first impedance network being configured to electrically connect to a sourcing side of the contactor, the sourcing side of the contactor being electrically connected to the first terminal of the traction battery, and a second impedance network having a second impedance equal to the first impedance, the second impedance network being configured to electrically connect to a load side of the contactor; and wherein the electric circuit is configured to electrically disconnect the traction battery from the traction voltage bus in an open state of the contactor and electrically connect the traction battery to the traction voltage bus in a closed state of the connector; a differential amplifier electrically connected to the first impendence network, the second impedance network, and the control unit, the differential amplifier being configured to, in response to the AC probe signal, receive a first signal via the first impedance network and a second signal via the second impedance network and providing a difference signal to the control unit based on the first and second signals; wherein the control unit is configured to determine whether the contactor is in a closed state or in an open state based on the difference signal.

According to other examples a system for weld checking a contactor for a traction battery of an electric vehicle is provided. The contactor 118 is arranged to be in a closed or an open state to electrically connect or disconnect the traction battery 112 from a traction voltage bus 124 of the electric vehicle 102; the system 100 comprising: an electric circuit 104; a control unit 106; wherein the electric circuit 104 comprises a first impedance network 114 having a first impedance, the first impedance network 114 being configured to electrically connect to a sourcing side 116 of the contactor 118, the sourcing side 116 of the contactor 118 being electrically connected to a first terminal 110 of the traction battery 112, and a second impedance network 120 having a second impedance equal to the first impedance, the second impedance network 120 being configured to electrically connect to a load side 122 of the contactor 118; and a differential amplifier 126 electrically connected to the first impendence network 114, the second impedance network 120, and the control unit 106, the differential amplifier 126 being configured to receive a first signal via the first impedance network 114 and a second signal via the second impedance network 120 and providing a difference signal to the control unit 106 based on the first and second signals; wherein the control unit 106 is configured to determine whether the contactor 118 is in the closed state or in the open state based on the difference signal.

Exemplary systems and methods are set out in the following items:
Example 1: A system for weld checking a contactor for a traction battery of an electric vehicle, the contactor 118 is arranged to be in a closed or an open state to electrically connect or disconnect the traction battery 112 from an electrical load 123 of the electric vehicle 102; the system 100 comprising:
   an electric circuit 104;
   wherein the electric circuit 104 comprises a first impedance network 114 having a first impedance, the first impedance network 114 being configured to electrically connect to a sourcing side 116 of the contactor 118, the sourcing side 116 of the contactor 118 being electrically connected to a first terminal 110 of the traction battery 112, and a second impedance network 120 having a second impedance equal to the first impedance, the second impedance network 120 being configured to electrically connect to a load side 122 of the contactor 118; and
   a differential amplifier 126 electrically connected to the first impendence network 114 and the second impedance network 120, the differential amplifier 126 being configured to receive a first signal via the first impedance network 114 and a second signal via the second impedance network 120 and to provide a difference signal based on the first and second signals;
   wherein the system 100 is configured to determine whether the contactor 118 is in the closed state or in the open state based on the difference signal.
Example 2: The system according to example 1, wherein the system 100 further comprises a control unit 106, the control unit 106 being configured to determine whether the contactor 118 is in a closed state or in an open state based on the difference signal being above a threshold value.
Example 3: The system according to example 1 or 2, further comprising an AC power source 108 configured to send an AC probe signal to the electric circuit 104, wherein the differential amplifier 126 is configured to receive the first signal and the second signal in response to the sent AC probe signal.
Example 4: The system according to example 3, wherein the system comprises a third impedance network 128 having a third impedance, the third impedance network 128 being electrically connected to the AC power source 108 such that the AC power source 108 is configured to provide the AC probe signal to the electric circuit 108 via the third impedance network 128.
Example 5: The system according to any one of examples 2 to 4, wherein the control unit 106, in a learning phase, is configured to determine and store signal values associated with the first and second signals upon the controller 118 being in a closed state and an open state, respectively.
Example 6: The system according to example 5, wherein the control unit 106, in a weld checking phase, is configured to determine whether the contactor 118 is in the closed state or in the open state based on the AC probe signals provided to the first and second impedance networks 114,120 and the stored signal values from the learning phase.
Example 7: The system according to any one of examples 2 to 6, wherein the control unit 106 is configured to determine a threshold value pertaining to a signal value difference between the first and second signals determined in closed state and the first and second signals determined in an open state.
Example 8: The system according to any one of examples 3 to 7, wherein the control unit 106, in a weld checking phase, is configured to determine whether the contactor 118 is in the closed state or in the open state based on the AC probe signals provided to the first and second impedance networks 114,120 and the threshold value.
Example 9: The system according to any one of examples 2 to 8, wherein the control unit 106 is configured to set or receive data pertaining to the contactor 118 being set in an open state and generate a warning signal upon determining that the contactor 118 is in a closed state thereby indicating that the contactor 118 is welded.
Example 10: The system according to any one of examples 1 to 9, wherein the first impendence network 114 comprises a first capacitor, C1, and a first resistor, R1, and the second impedance network 120, comprises a second capacitor, C2, and a second resistor, R2, wherein the capacitance of the first capacitor, C1, is the same as the capacitance of the second capacitance, C2, and the resistance of the first resistor, R1, is the same as the second resistor, R2.
Example 11: The system according to any one of examples 4 to 10, wherein the third impendence network 128 comprises a third capacitor, C3, and a third resistor, R3, whereby the impedance of the third impendence network 128 is set to match the impedance at the first terminal 110.
Example 12: The system according to any one of examples 3 to 11, wherein the differential amplifier 126 is a high-Q differential amplifier configured to pass signals within a frequency range, wherein the AC power source 108 is tunable in frequency such that the frequency of the AC probe signal is within the frequency range.
Example 13: The system according to example 12, wherein the differential amplifier 126 is configured to determine a phase difference pertaining to the AC probe signal, the received first and a second signals and wherein the provided difference signal is based on the detected phase information; and wherein the control unit 106 is configured to determine whether the contactor 118 is in a closed state or in an open state based on the difference signal.
Example 14: The system of example 12, wherein the difference signal pertains to a phase difference and wherein the control unit 106 is configured to determine whether the contactor 118 is in the closed state or in the open state based on the phase difference being lower than a phase difference threshold value.
Example 15: An electric vehicle comprising the system according to any one of examples 1 to 14.
Example 16: A method for weld checking a contactor for a traction battery of an electric vehicle, the electric vehicle 102 comprising the system 100 according to any one of examples 1 to 14, the method 200 comprising: receiving 204, by the differential amplifier 126 a first signal via the first impedance network 114 and a second signal via the second impedance network 120; providing 206 a difference signal based on the received first and second signals; determining 208 whether the contactor 118 is in a closed state or in an open state based on the difference signal.
Example 17: The method of example 16, the method further comprising sending 202 an AC probe signal from the AC power source 108 to the electric circuit 104; wherein the receiving 204, by the differential amplifier 126 of the first signal and the second signal is in response to the AC probe signal.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system for weld checking a contactor for a traction battery of an electric vehicle, the contactor (118) is arranged to be in a closed or an open state to electrically connect or disconnect the traction battery (112) from an electrical load (123) of the electric vehicle (102); the system (100) comprising:
an electric circuit (104);
wherein the electric circuit (104) comprises a first impedance network (114) having a first impedance, the first impedance network (114) being configured to electrically connect to a sourcing side (116) of the contactor (118), the sourcing side (116) of the contactor (118) being electrically connected to a first terminal (110) of the traction battery (112), and a second impedance network (120) having a second impedance equal to the first impedance, the second impedance network (120) being configured to electrically connect to a load side (122) of the contactor (118); and
a differential amplifier (126) electrically connected to the first impendence network (114) and the second impedance network (120), the differential amplifier (126) being configured to receive a first signal via the first impedance network (114) and a second signal via the second impedance network (120) and to provide a difference signal based on the first and second signals;
wherein the system (100) is configured to determine whether the contactor (118) is in the closed state or in the open state based on the difference signal.

2. The system according to claim 1, wherein the system (100) further comprises a control unit (106), the control unit (106) being configured to determine whether the contactor (118) is in a closed state or in an open state based on the difference signal being above a threshold value.

3. The system according to claim 1 or 2, further comprising an AC power source (108) configured to send an AC probe signal to the electric circuit (104), wherein the differential amplifier (126) is configured to receive the first signal and the second signal in response to the sent AC probe signal.

4. The system according to claim 3, wherein the system comprises a third impedance network (128) having a third impedance, the third impedance network (128) being electrically connected to the AC power source (108) such that the AC power source (108) is configured to provide the AC probe signal to the electric circuit (108) via the third impedance network (128).

5. The system according to any one of claims 2 to 4, wherein the control unit (106), in a learning phase, is configured to determine and store signal values associated with the first and second signals upon the controller (118) being in a closed state and an open state, respectively.

6. The system according to claim 5, wherein the control unit (106), in a weld checking phase, is configured to determine whether the contactor (118) is in the closed state or in the open state based on the AC probe signals provided to the first and second impedance networks (114,120) and the stored signal values from the learning phase.

7. The system according to any one of claims 2 to 6, wherein the control unit (106) is configured to determine a threshold value pertaining to a signal value difference between the first and second signals determined in closed state and the first and second signals determined in an open state.

8. The system according to any one of claims 3 to 7, wherein the control unit (106), in a weld checking phase, is configured to determine whether the contactor (118) is in the closed state or in the open state based on the AC probe signals provided to the first and second impedance networks (114,120) and the threshold value.

9. The system according to any one of claims 2 to 8, wherein the control unit (106) is configured to set or receive data pertaining to the contactor (118) being set in an open state and generate a warning signal upon determining that the contactor (118) is in a closed state thereby indicating that the contactor (118) is welded.

10. The system according to any one of claim 1 to 9, wherein the first impendence network (114) comprises a first capacitor, C1, and a first resistor, R1, and the second impedance network (120), comprises a second capacitor, C2, and a second resistor, R2, wherein the capacitance of the first capacitor, C 1, is the same as the capacitance of the second capacitance, C2, and the resistance of the first resistor, R1, is the same as the second resistor, R2.

11. The system according to any one of claims 4 to 10, wherein the third impendence network (128) comprises a third capacitor, C3, and a third resistor, R3, whereby the impedance of the third impendence network (128) is set to match the impedance at the first terminal (110).

12. The system according to any one of claims 3 to 11, wherein the differential amplifier (126) is a high-Q differential amplifier configured to pass signals within a frequency range, wherein the AC power source (108) is tunable in frequency such that the frequency of the AC probe signal is within the frequency range.

13. The system according to claim 12, wherein the differential amplifier (126) is configured to determine a phase difference pertaining to the AC probe signal, the received first and a second signals and wherein the provided difference signal is based on the detected phase information; and wherein the control unit (106) is configured to determine whether the contactor (118) is in a closed state or in an open state based on the difference signal.

14. The system of claim 12, wherein the difference signal pertains to a phase difference and wherein the control unit (106) is configured to determine whether the contactor (118) is in the closed state or in the open state based on the phase difference being lower than a phase difference threshold value.

15. An electric vehicle comprising the system according to any one of claims 1 to 14.

16. A method for weld checking a contactor for a traction battery of an electric vehicle, the electric vehicle (102) comprising the system (100) according to any one of claims 1 to 14, the method (200) comprising: receiving (204), by the differential amplifier (126) a first signal via the first impedance network (114) and a second signal via the second impedance network (120); providing (206) a difference signal based on the received first and second signals; determining (208) whether the contactor (118) is in a closed state or in an open state based on the difference signal.

17. The method of claim 16, the method further comprising sending (202) an AC probe signal from the AC power source (108) to the electric circuit (104); wherein the receiving (204), by the differential amplifier (126) of the first signal and the second signal is in response to the AC probe signal.
